(19) Europäisches Patentamt

European Patent Office

Office européen des brevets

(11) EP 0 560 953 B1

(12) EUROPÄISCHE PATENTSCHRIFT

(45) Veröffentlichungstag und Bekanntmachung des Hinweises auf die Patenterteilung:
**12.06.1996  Patentblatt 1996/24**

(51) Int Cl.6: **G01P 3/48**

(86) Internationale Anmeldenummer:
**PCT/DE92/00760**

(21) Anmeldenummer: **92919067.6**

(22) Anmeldetag: **08.09.1992**

(87) Internationale Veröffentlichungsnummer:
**WO 93/07496 (15.04.1993 Gazette 1993/10)**

(54) **VERFAHREN ZUR MESSUNG DER DREHZAHL EINES ROTIERENDEN TEILES**

PROCESS FOR MEASURING THE ROTATION SPEED OF A ROTATING COMPONENT

PROCEDE SERVANT A MESURER LA VITESSE D'UN ELEMENT ROTATIF

(84) Benannte Vertragsstaaten:
**DE FR GB IT**

(30) Priorität: **08.10.1991  DE 4133269**

(43) Veröffentlichungstag der Anmeldung:
**22.09.1993  Patentblatt 1993/38**

(73) Patentinhaber: **ROBERT BOSCH GMBH**
**70442 Stuttgart (DE)**

(72) Erfinder:
• **ROLLWAGE, Mathias**
  **D-7257 Ditzingen (DE)**
• **THOENNISSEN, Jochen**
  **D-7000 Stuttgart 31 (DE)**
• **GOBERNATZ, Michael**
  **D-7000 Stuttgart 1 (DE)**

(56) Entgegenhaltungen:
**EP-A- 0 287 852      DE-A- 2 546 795**
**FR-A- 2 555 317**

## Beschreibung

Stand der technik

Die Erfindung geht aus von einer Vorrichtung nach der Gattung des Hauptanspruchs.

Zur Bestimmung der Drehzahl von rotierenden Teilen werden üblicherweise Markierungen, die am rotierenden Teil angebracht sind, mit Hilfe eines Induktivgebers oder optischen Sensors abgetastet. Das Vorbeilaufen einer solchen Marke am feststehenden Geber erzeugt Spannungsimpulse, aus deren Wiederholfrequenz sich die Drehzahl ermitteln läßt.

Bei rotierenden Teilen, die vollständig von einem Gehäuse umgeben sind, ist eine solche Drehzahlermittlung nicht möglich. Bei Elektrokraftstoffpumpen beispielsweise, die komplett gekapselt sind, sind keine drehbaren Teile nach außen geführt, die eine einfache Drehzahlbestimmung möglich machen würden. In Laborversuchen wurden daher drehzahlabhängige Signale zur Ermittlung der Drehzahl analysiert, beispielsweise:

die Schwingbeschleunigung auf dem Elektrokraftstoff-Pumpengehäuse, Druckschwankungen auf der Saugseite oder der Druckseite, Stromschwankungen in den elektischen Versorgungsleitungen, Magnetfeldschwankungen außerhalb der Elektrokraftstoffpumpe, die durch die rotierenden Ankersegmente mit den dazugehörigen Stromführungswechseln verursacht werden.

Diese Signale wurden beispielsweise mit getrennten Sensoren ermittelt und in einer nachfolgenden Auswerteanordnung verarbeitet. Die Bestimmung der Drehzahl durch Ausmessung der Abstände einzelner Schwingungen hat sich bei den angesprochenen Laborversuchen als nicht zuverlässig erwiesen.

Eine weitere Möglichkeit zur Bestimmung der Drehzahl von rotierenden Teilen wird in der FR-A-25 55 317 angegeben. Dabei wird der Strom, der einen Elektromotor antreibt, zur Drehzahlerfassung ausgewertet, dies ist möglich, da dem Strom eine drehzahlabhängige Komponente überlagert ist. Diese drehzahlabhängige Komponente ergibt nach einer in einem Rechner durchgeführten Fouriertransformation ein Spektrum, das eine Aussage bezüglich der Drehzahl zuläßt.

Vorteile der Erfindung

Das erfindungsgemäße Verfahren mit den Merkmaler des Hauptanspruchs hat demgegenüber den Vorteil, daß die Erfassung eines drehzahlabhängigen Signales und dessen anschließende zweimalige Fouriertransformation eine eindeutige und genaue Drehzahlmessung ermöglicht.

Besonders vorteilhaft ist, in Verbindung mit einer Messung der Drehzahl der Elektrokraftstoffpumpe, als drehzahlabhängiges Signal das Stromsignal zu verwenden, dieses in eine Spannung zu wandeln und zwei schnellen Fouriertransformationen zu unterwerfen.

Durch das wechselnde Bestromen der Ankerwicklungen während der Drehung des Ankers entstehen Stromschwankungen. Diese Stromschwankungen, die mit einer ganz bestimmten, drehzahlabhängigen Frequenz auftreten, sind nach einer ersten Fouriertransformation als Maxima im Spektrum zu erkennen; nach einer weiteren Fouriertransformation tritt die Drehzahl als absolutes Maximum auf und kann in einfacher Weise ausgewertet werden.

Durch Vergleich der aus dem durch eine zweite Fouriertransformation erhaltenen Spektrum, ermittelter Drehzahl mit z. B. den Hauptanteilen des nach der ersten Fourier transformation erhaltenen Spektrums ist eine Plausibilitätsüberprüfung möglich.

Zeichnung

Ein Ausführungsbeispiel der erfindungsgemäßen Vorrichtung ist in Figur 1 abgebildet, in Figur 1a ist eine Innenzahnradpumpe schematisch dargestellt, Figur 2 zeigt den gemessenen Stromverlauf über der Zeit nach einer Bandpaßfilterung, Figur 3 zeigt das nach der ersten Fouriertransformation erhaltene Spektrum in Abhängigkeit von der Frequenz und Figur 4 das nach einer weiteren Fouriertransformation erhaltene Spektrum über der Zeit t.

Beschreibung des Äusführungsbeispieles

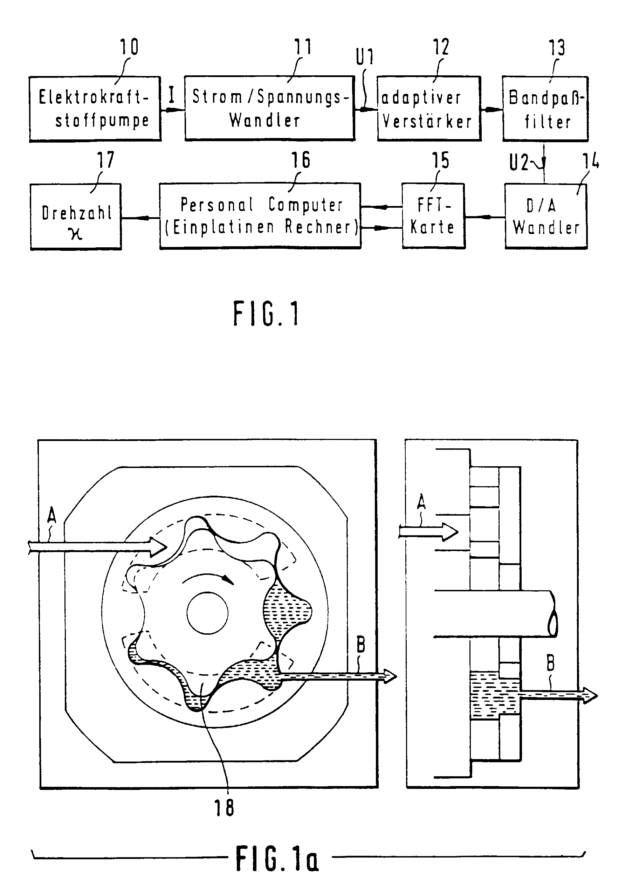

In Figur 1 ist ein Ausführungsbeispiel der Erfindung in Form eines Blockschaltbildes dargestellt. Dabei bezeichnet 10 die Elektrokraftstoffpumpe, deren Drehzahl ermittelt werden soll. Mit 11 ist eine meßeinrichtung bezeichnet, die das Stromsignal oder die vor Stromsignal verursachten Magnetfelder der Elektrokraftstoffpumpe mißt, wobei gleichzeitig eine Wandlung des gemessenen Stromes in eine Spannung U1 erfolgt.

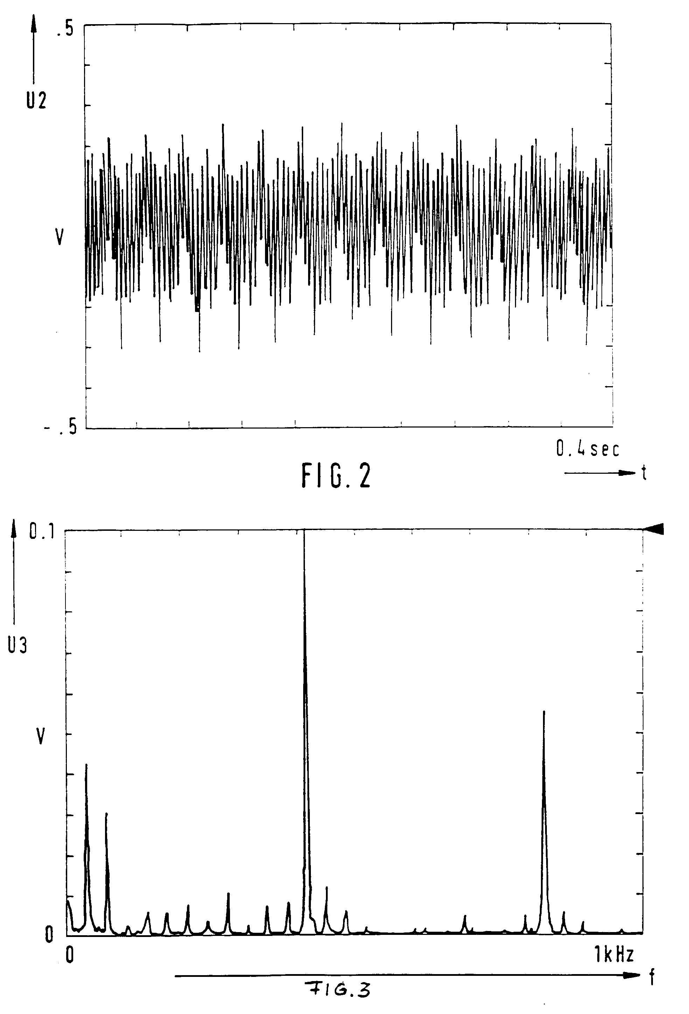

An die Meßeinrichtung 11 schließt sich ein adaptiver Verstärker 12 an, in dem die Spannung U1 verstärkt wird, in einem nachfolgenden Bandpaßfilter 13 erfolgt eine Signalfilterung, so daß am Ausgang des Bandpaßfilters ein Signal U2 zur weiteren Auswertung bereit steht. Das Signal U2 ist in Figur 2 über der Zeit t aufgetragen.

Im Analog/-Digital-Wandler 14 wird das Signal U2 digitalisiert, in einem nachfolgenden Block 15, der Bestandteil eines Rechners 16 sein kann, laufen Fouriertransformationen ab, 15 kann auch als FFT-Karte bezeichnet werden.

In einer mit 17 bezeichneten Ausgabeeinheit wird das im Rechnner 16 ermittelte Drehzahlmeßergebnis ausgegeben.

Bei der mit 10 bezeichneten Elektrokraftstoffpumpe, deren Drehzahl ermittelt werden soll, kann es sich um eine beliebige Elektropumpe handeln, beispielsweise eine Rollenzellenpumpe, eine Innenzahnradpumpe, eine Peripheralpumpe oder eine Seitenkanalpumpe. All diese Pumpentypen sind vollständig von einem Gehäuse umgeben, so daß von außen kein drehbares Teil zugegängig bzw. erkennbar ist, über das die Drehzahl relativ einfach ermittelt werden konnte. Selbstverständlich läßt sich die Erfindung auf alle gekoppelten Motoren ausdehnen.

Der der Elektrokraftstoffpumpe 10 zugeführte elektrische Strom, der letztendlich eine Drehung des Ankers der Elektrokraftstoffpumpe bewirkt, soll erfindungsgemäß ausgewertet werden.

Durch das wechselnde Bestromen der Ankerwicklungen der Pumpen während der Drehung entstehen periodische Stromschwankungen. Diese Stromschwankungen sind drehzahlabhängig und können zur Bestimmung der Drehzahl der Elektrokraftstoffpumpe herangezogen werden, indem das sogenannte Stromformbild I gemessen wird.

Bei einer in Figur 1a dargestellten Elektrokraftstoffpumpe 10, einer Innenzahnradpumpe mit einem Einlaß A und einem Auslaß B mit achtnutigen Anker 18 folgt auf acht Kommutierungen die erste Wiederholung.

Im Stromformbild I sind sowohl die beim Stromwechsel entstehende Wechselfrequenz als auch ganzzahlige Vielfache dieser Wechselfrequenz und der Drehzahlfequenz vorhanden.

In der Meßeinrichtung 11 wird der Strom der Elektrokraftstoffpumpe gemessen, indem der Strom beispielsweise durch einen Shuntwiderstand geleitet und die an diesen Widerstand abfallende Spannung U1 abgegriffen wird.

Eine verbesserte Meßeinrichtung 11 verwendet einen Stromwandler, der auf dem Prinzip der Kompensation von Magnetfeldern basiert und einen dem Primärstrom proportonalen Meßstrom liefert. Dieser Strom wird über einen Präzisions-Metallfilmwiderstand in eine proportionale Spannung U1 gewandelt, die nachfolgend ausgewertet wird.

Da die Spannung U1, die die Eingangsspannung des adaptiven Verstärkers 12 darstellt, im weiten Bereich schwanken kann, wird sie im adaptiven Verstärker 12 so verstärkt, daß an seinem Ausgang unabhängig von der Höhe der Eingangsspannung eine Ausgangsspannung innerhalb fester Grenzen entsteht. Die Spannung U1 enthält im übrigen dieselben Frequenzanteile wie das Strombild I.

Das Bandpaßfilter 13 ist ein übliches Bandpaßfilter, das die zu untersuchenden Frequenzanteile durchläßt und die übrigen Frequerzanteile absorbiert.

Im A/D-Wandler 14 erfolgt eine Digitalisierung des Signals U2, so daß anschließend eine digitale Fouriertransformation durchgeführt werden kann.

Die FFT-Karte 15 ist eine Einrichtung, in der schnelle Fouriertransformationen (FFT = Fast Fouriertransfomation) berechnet werden. Solche FFT sind z.B. aus J. W. Cooley and J. W. Tinkey: "An algorithm for the machine calculation of complex fourier series" in: Math. of Comp., Vol 19, No. 90, pp. 297-301, 1965 bekannt.

Die Auswertung der nach der bzw. den Fouriertransformationen erhaltenen Signale bzw. Spektren erfolgt in einem Rechner 16, der beispielsweise ein Personalcomputer oder ein Einplatinen-Rechner ist.

Wird das in Figur 2 dargestellte Signal U2(t), das aus dem Stromsignal der Elektrokraftstoffpumpe nach adaptiver Verstärkung und Bandpaßfilterung erhalten wird, einer ersten Fourietransformation unterworfen, entsteht das Spektrum U3 (f). Dieses Spektrum enthält mehrere relative Maxima bei Frequenzen, die jeweils einem Vielfachen der Drehzahl der Elektrokraftstoffpumpe entsprechen. Es wäre möglich, aus diesen Maxima eine Drehzahlbestimmung durchzuführen, es hat sich jedoch gezeigt, daß eine solche Drehzahlbestimmung durch verschiedenartige Effekte gestört wird. Wird dagegen das Signal U3 (f) in 15 ein zweites Mal einer FFT unterworfen, entsteht ein Signal U4 (t), das direkt ausgewertet werden kann. Dabei wird die durch viele Drehzahle harmonisch erzeugte Periodizität des Spektrums ausgenutzt, es entstehen keine Fehlmessungen, wenn einzelne harmonische im Spektrum fehlen oder die Peakamplituden von Spektrum zu Spektrum stark schwanken.

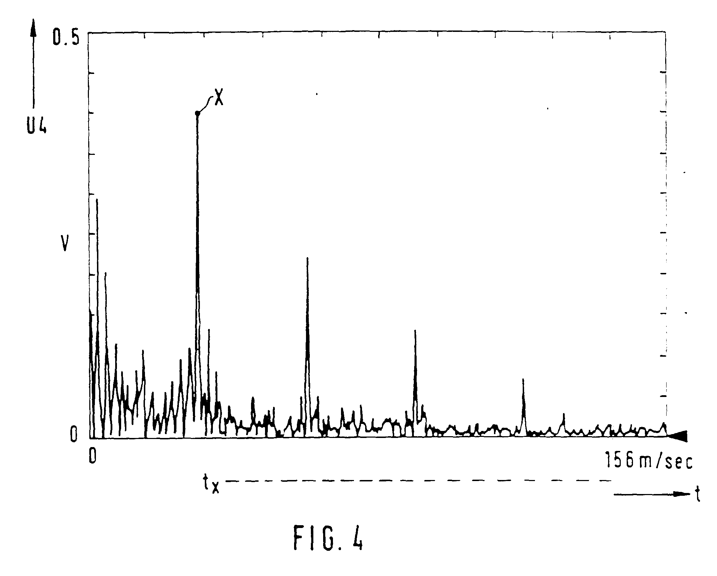

In dem in Figur 4 dargestellten Spektrum U4 (t) tritt die Drehzahl als absolutes Maximum x auf, weil der entsprechende Linienabstand die deutlichste Periodizität im FFT-Spektrum ist. Die in Figur 4 mit X bezeichnete Stelle zeigt das von der Drehzahl abhängige Maximum, die zugehörige Zeit $t_x$ wird bestimmt und kann über Proportionalitätsbetrachtungen zur exakten Ermittlung der Drehzahl verwendet werden, da $n \sim \frac{1}{t}$.

Die in Figur 4 enthaltenen niedrigen Maxima legen Zeiten fest, die der doppelten, dreifachen oder vierfachen Drehzahl entsprechen.

Ein Vergleich der aus dem Spektrum nach Figur 4 ermittelten Drehzahl mit den aus Figur 3 ableitbaren Drehzahlwerten ermöglicht auf vielfältige Art und Weise eine Plausibilitätsüberprüfung, indem ein Vergleich mit den Hauptanteilen des FFT-Spektrums erfolgt.

Die Meßgenauigkeit des beschriebenen Verfahrens hängt von der Datenlänge der Berechnungen der Fouriertransformationen ab. Sollen genaue Meßergebnisse erhalten werden, ist ein erhöhter Rechenaufwand bei den Durchführungen der Fouriertransformationen erforderlich.

**Patentansprüche**

1.  Verfahren zur Messung der Drehzahl eines rotierenden Teiles, das von einem Gehäuse umgeben ist, wobei ein Strom (I) zugeführt wird, dessen Verlauf von der Drehzahl (n) des rotierenden Teiles abhängt, wobei der Strom erfaßt wird und in eine Spannung (U1) gewandelt wird und diese Spannung (U1) gefiltert und digitalisiert wird und einer Fouriertransformation unterworfen wird zur Erfassung der Drehzahl (n), dadurch gekennzeichnet, daß eine zweite Fouriertransformation durchgeführt wird und die Drehzahl (n) aus dem nach der zweiten Fouriertransformation erhaltenen Spektrum (U4(t)) durch Auswerten des absoluten Maximus (X) ermittelt wird.

2. Verfahren nach Anspruch 1, dadurch gekennzeichnet, daß die Drehzahl (n) aus dem Kehrwert der zum absoluten Maximum (X) von U4 (t) gehörenden Zeit (tx) bestimmt wird.

3. Verfahren nach Anspruch 1 oder 2, dadurch gekennzeichnet, daß das rotierende Teil der Anker einer Elektrokraftstoffpumpe ist.

4. Verfahren nach Anspruch 3, dadurch gekennzeichnet, daß der Strom (I) das Stromsignal oder das Magnetsignal der Elektrokraftstoffpumpe ist.

5. Verfahren nach einem der vorhergehenden Ansprüche, dadurch gekennzeichnet, daß die Fouriertransformationen und/oder die weitere Auswertung in einem Mikrorechner erfolgen.

6. Vorrichtung zur Durchführung des Verfahrens nach einem der vorhergehenden Ansprüche, mit einer Meßeinrichtung (11), die so ausgebildet ist, daß sie den von der Drehzahl (n) abhängigen Strom (I) ermittelt und ein Spannungssignal (U1(t)) abgibt, das über einen Verstärker (12) und einen Bandpaß (13) einem Analog-/Digital-Wandler zuführbar ist, mit einem nachgeschalteten Fourieranalysator (15), der zur Durchführung von zwei schnellen Fouriertransformationen (FFT) ausgebildet ist, und einer Recheneinrichtung (16), welche zur Auswertung des so erhaltenen Spektrums (U4(t)) und zur Ermittlung der Drehzahl aus dem absoluten Maximum (X) des Spektrums (U4(t)) ausgebildet ist.

7. Vorrichtung nach Anspruch 6, dadurch gekennzeichnet, daß der Verstärker (12) ein adaptiver Verstärker ist, der die zugeführten Signale so verstärkt, daß an seinem Ausgang unabhängig von der Höhe der Eingangsspannung eine Ausgangsspannung innerhalb fester Grenzen entsteht.

8. Vorrichtung nach Anspruch 6 oder 7, dadurch gekennzeichnet, daß eine Meßeinrichtung, welche als Strommeßgerät (11) nach dem Prinzip der Kompensation von Magnetfeldern arbeitet, vorhanden ist und an ihrem Ausgang eine dem gemessenen Strom entsprechende Spannung (U2) liefert.

**Claims**

1. Process for measuring the rotational speed of a rotating component which is surrounded by a housing, a current (I) being supplied whose variation depends on the rotational speed (n) of the rotating component, the current being detected and transformed into a voltage (U1) and this voltage (U1) being filtered and digitized and subjected to a Fourier transformation in order to detect the rotational speed (n), characterized in that a second Fourier transformation is carried out and the rotational speed (n) is determined from the range (U4(t)), obtained according to the second Fourier transformation, by evaluating the absolute maximum (X).

2. Process according to Claim 1, characterized in that the rotational speed (n) is determined from the reciprocal value of the time (tx) associated with the absolute maximum (X) of U4(t).

3. Process according to Claim 1 or 2, characterized in that the rotating component is the armature of an electric fuel pump.

4. Process according to Claim 3, characterized in that the current (I) is the current signal or the magnet signal of the electric fuel pump.

5. Process according to one of the preceding claims, characterized in that the Fourier transformations and/or the further evaluation take place in a microcomputer.

6. Device for carrying out the process according to one of the preceding claims, having a measuring device (11) which is designed in such a way that it determines the current (I) which is dependent on the rotational speed (n), and outputs a voltage signal (U1(t)) which can be supplied to an analog-digital converter by an amplifier (12) and a bandpass filter (13), having a downstream Fourier analyzer (15) which is designed to carry out two fast Fourier transformations (FFT), and an arithmetic unit (16) which is designed to evaluate the range (U4(t)) obtained in this way and to determine the rotational speed from the absolute maximum (X) of the range (U4(t)).

7. Device according to Claim 6, characterized in that the amplifier (12) is an adaptive amplifier which amplifies the supplied signals in such a way that an output voltage is produced within fixed limits at its output independently of the level of the input voltage.

8. Device according to Claim 6 or 7, characterized in that a measuring apparatus which operates as current measuring apparatus (11) according to the principle of compensation of magnetic fields is present and supplies at its output a voltage (U2) which corresponds to the measured current.

**Revendications**

1. Procédé de mesure de la vitesse de rotation d'une pièce en rotation entourée par un boîtier, selon lequel on fournit un courant (I) dont la forme dépend de la vitesse de rotation (n) de la pièce en rotation, selon lequel on détecte l'intensité du courant et on la transforme en une tension (U1) que l'on filtre et numérise pour la soumette à une transformation de Fourier et détecter la vitesse de rotation (n), caractérisé en ce qu'on effectue une seconde transformation de Fourier et on détermine la vitesse de rotation (n) à partir du spectre (U4(t)) résultant de la seconde transformation de Fourier en exploitant le maximum absolu (X).

2. Procédé selon la revendication 1, caractérisé en ce qu'on détermine la vitesse de rotation (n) à partir de l'inverse du temps (tx) correspondant au maximum de la valeur (X) de (U4(t)).

3. Procédé selon la revendication 1 ou 2, caractérisé en ce que la pièce rotative est l'induit d'une pompe électrique de carburant.

4. Procédé selon la revendication 3, caractérisé en ce que l'intensité (I) est le signal de courant ou le signal magnétique de la pompe électrique de carburant.

5. Procédé selon l'une des revendications précédentes, caractérisé en ce que l'on effectue les transformations de Fourier et/ou les autres exploitations dans un microcalculateur.

6. Dispositif pour la mise en oeuvre du procédé selon l'une des revendications précédentes, comprenant une installation de mesure (11) réalisée pour déterminer le courant (I) dépendant de la vitesse de rotation (n) et fournissant un signal de tension (U1(t)) qui passe par l'amplificateur (12) et un filtre passe-bande (13) pour être appliqué à un convertisseur analogique/numérique, à un analyseur de Fourier (15) en aval effectuant deux transformations de Fourier rapides (FFT) ainsi qu'une installation de calcul (16) pour exploiter le spectre (U4(t)) ainsi obtenu et déterminant la vitesse de rotation à partir du maximum absolu (X) du spectre (U4(t)).

7. Dispositif selon la revendication 6, caractérisé en ce que l'amplificateur (12) est un amplificateur adaptatif qui amplifie les signaux reçus pour fournir à sa sortie une tension de sortie située dans des limites fixes indépendamment de l'amplitude de la tension d'entrée.

8. Dispositif selon la revendication 6 ou 7, caractérisé par une installation de mesure fonctionnant comme appareil de mesure d'intensité (11) selon le principe de la compensation des champs magnétiques et dont la sortie fournit une tension (U2) correspondant au courant mesuré.

FIG.1

FIG.1a

FIG. 2

FIG.3

FIG. 4